(19) Europäisches Patentamt
European Patent Office
Office européen des brevets

(11) Numéro de publication: **0 056 767**
**B1**

(12) **FASCICULE DE BREVET EUROPEEN**

(45) Date de publication du fascicule du brevet: **19.09.84**

(51) Int. Cl.$^3$: **C 07 F 9/53**, C 07 F 9/46, C 08 F 8/40

(21) Numéro de dépôt: **82400083.0**

(22) Date de dépôt: **18.01.82**

(54) **Procédé de synthèse d'oxydes et de sulfures de phosphines tertiaires et nouveaux oxydes et sulfures de phosphines tertiaires.**

(30) Priorité: **19.01.81 FR 8100856**

(43) Date de publication de la demande:
**28.07.82 Bulletin 82/30**

(45) Mention de la délivrance du brevet:
**19.09.84 Bulletin 84/38**

(84) Etats contractants désignés:
**BE CH DE FR GB IT LI NL SE**

(56) Documents cités:
**DE-B-1 167 831**
**FR-A-2 378 302**
**BULLETIN OF THE CHEMICAL SOCIETY OF JAPAN, vol. 47, no. 10, octobre 1974, (JP), T. EMOTO et al. "Metal phosphinylides and phosphinothiolides. I. Formation of metal diphenylphosphinylides and diphenylphosphinothiolydes and the reactions with some organic halides and aldehydes", pages 2449-2452**
**JOURNAL OF INORGANIC & NUCLEAR CHEMISTRY, vol. 39, 1977, Pergamon Press (GB), s.O. GRIM et al. "Synthesis and magnetic resonance studies of some phosphinous acids, phosphoryl-acetic acids, and some of their coordination compounds", pages 499-511**

(73) Titulaire: **SOCIETE NATIONALE DES POUDRES ET EXPLOSIFS**
**12, quai Henri IV**
**F-75181 Paris Cedex 04 (FR)**

(72) Inventeur: **Bergeret, Wilfrid Henri**
**8, rue Léon Bua**
**F-91100 Corbeil-Essonnes (FR)**
Inventeur: **Gautier, Jean-claude Camille Gabriel**
**1 rue Brossolette**
**F-94480 Ablon-sur-Seine (FR)**
Inventeur: **Raynal, Serge Fernand**
**Orée de Sénart Bâtiment Heredia**
**F-91210 Draveil (FR)**
Inventeur: **Boileau, Sylvie**
**38-40 rue des Cordelières**
**F-75013 Paris (FR)**

(56) Documents cités:
**BULLETIN OF THE CHEMICAL SOCIETY OF JAPAN, vol. 47, no. 11, novembre 1974, (JP), M. YOSHIFUJI et al. "Metal phosphinylides and phosphinothioylides. III. Reactions of lithium diphenylphosphinylide and diphenylphosphinothiolide with acetone and bromoacetone", pages 2905-2906**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 056 767 B1**

**Description**

Les oxydes et les sulfures de phosphines tertiaires sont parmi les plus stables des dérivés phosphorés organiques. Cette stabilité ainsi que les qualités complexantes de ces produits les rendent extrêmement attractifs. De fait la synthèse de ces composés a fait l'objet d'investigations diverses et approfondies.

Pour illustrer la diversité des voies de synthèse proposées on peut citer le brevet français 2 159 716 de la Demanderesse qui est basé sur l'action de l'oxychlorure de phosphore ou de $PSCl_3$ sur un réactif de Grignard, le brevet français 1 399 743 qui préconise l'action du mélange oxygène — $PCl_3$ sur les mêmes magnésiens, le brevet US 3 258 492 qui met en oeuvre un chlorure de phosphonyle, ainsi que le brevet allemand 1 912 708, le brevet français 2 316 244, le brevet US 3 997 611, et le brevet US 4 020 110 qui réalisent la décomposition thermique respectivement du produit d'addition d'un oxyde de dialkylphosphite sur une $\alpha$-oléfine, d'un halogénure de phosphonium quaternaire, d'un halogénure de phosphonium quaternaire hydroxylé et d'une phosphine tertiaire hydroxyméthylée. On peut citer encore une autre voie impliquant l'action du phosphore sur un iodure d'alcoyle en présence d'iode, comme cela est illustré par le brevet français 2 352 824.

Une autre voie de synthèse consiste à réaliser la condensation d'un sel halogéno-magnésien d'un oxyde de phosphine secondaire sur un dérivé organique halogéné selon la schéma:

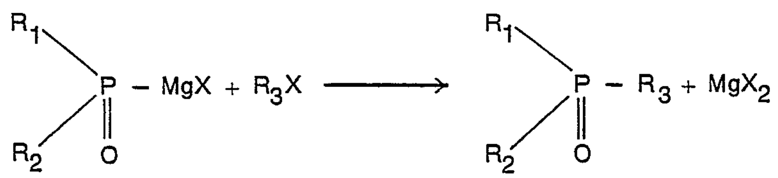

Un tel procédé a été décrit et étudié notamment par Downie et Morrs, Journal of the Chemical Society (1965), page 5771. L'inconvénient de ce procédé tient notamment à la lenteur de la réaction et aux précautions qu'implique nécessairement tout emploi des magnésiens à savoir un milieu rigoureusement anhydre et des mesures de sécurité redoublées dû à l'emploi massif d'éther.

Aussi certains auteurs, tels que Petrov et coll., Zh. Obshch. Khim 30, 1964 (1960), ont-ils préconisé d'utiliser plutôt un phosphinite alcalin selon l'équation:

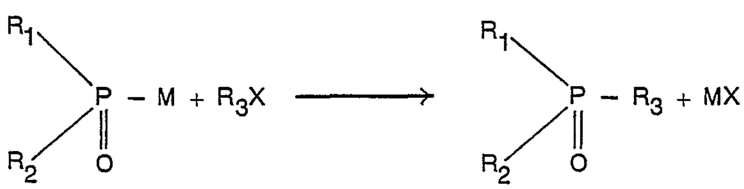

(A)

avec M = Li, Na, K.

Ces mêmes auteurs n'échappent toutefois pas aux inconvénients précités du fait qu'ils utilisent encore un magnésien pour préparer ledit phosphinite alcalin. Pour éliminer complètement l'emploi de magnésien au niveau de cette étape, d'autres auteurs ont proposé des solutions partant d'oxydes ou de sulfures de phosphines:

(1) Emoto et coll., Bulletin of the Chemical Society of Japan, volume 47 (10), p 2449—2452, (1974) proposent d'appliquer la réaction: $Ph_2PXH + n-BuLi \rightarrow Ph_2PXLi + C_4H_{10}$ avec X = O ou S.

(2) Osipenko et coll., dans Zhurnal Obshchei Khimii, Vol. 47, N° 11, pp. 2620—2621, (1977) procèdent à partir d'oxyde de phosphine secondaire selon l'équation:

$Bu_2POH + 2K \rightarrow Bu_2POK + KOH$, dans le THF.

(3) Horner et Coll., dans Chemische Berichte, *94*, (1961), pages 1317—1322, proposent quant à eux l'action (qui peut être explosive) d'un hydrure alcalin sur un oxyde de phosphine tertiaire:

$$R_3PO + MH \rightarrow R_2POM + RM$$

Ces solutions sont critiquables en ce que dans (1) n-BuLi est coûteux et dangereux, dans (2) il y a emploi de potassium métallique qui est dangereux et relativement plus cher que le sodium et le lithium et dans (3) il y a nécessité d'employer une température élevée (160 à 300°C selon la nature de M) et de partir d'un oxyde de phosphine tertiaire c'est à dire d'un composé du même type que celui qui est finalement visé.

Par ailleurs, si l'art antérieur offre globalement des solutions assez satisfaisantes pour synthétiser les phosphinites ou les thiophosphinites alcalins, il reste que la réaction (A) selon Petrov et coll. (op.cit.) ne donne entière satisfaction jusqu" présent que dans des cas exceptionnellement favorables.

Ainsi si l'on utilise un diphénylphosphinite alcaline, il y a stabilisation exceptionnelle de l'intermédiaire de réaction et la réaction (A) est très favorisée. Il n'est pas étonnant dans ces conditions que DE—1 948 987 qui utilise un phosphinite de potassium très réactif permette d'aboutir à des greffages de groupes $R_3$ même réactifs du type macromoléculaire, de même qu'il n'est pas surprenant que Emoto et coll. (op. cit.) fassent de même avec $R_3 = CH_3$, la chose étant ici encore plus facilitée par l'emploi d'iodure de préférence à un bromure ou un chlorure ou que DE—1 167 831, lui aussi limité à l acide diphényl phosphineux, autorise une réaction rapide en présence d'alcoolate alcalin.

D'une manière comparable, Osipenko et coll. (op.cit.) n'obtiennent de bons résultats qu'en utilisant un halogénure de type $R_3X$ où le groupe $R_3$ est puissamment activé (groupe méthoxy sur le carbone en $\alpha$) et cela encore au prix d'une durée de réaction fort longue. Si. au contraire, on utilise un halogénure organique où $R_3$ n'est pas activé, on constate comme l'ont fait Horner et coll. (op.cit.) que des temps très longs et des températures très élevées sont nécessaires pour obtenir un bon rendement.

Finalement, en dépit des nombreuses investigations faites par des chercheurs d'horizons très différents, on doit constater qu'on ne connaît pas de procédé permettant de fabriquer facilement un dialkylphosphinite ou thiophosphinite alcalin et de faciliter l'action de ce dernier sur un halogénure organique non activé.

C'est ce but que se propose d'atteindre l'invention, en y ajoutant dautres avantages notamment au niveau des coûts et de la sécurité.

Ce procédé selon l'invention est un procédé de synthèse d'oxydes ou de sulfures de phosphines tertiaires de formule $R_1R_2R_3PZ$ avec $Z = S$ ou O consistant dans une première étape à obtenir un dihydrocarbyl (thio)phosphinite alcalin de formule $R_1R_2PZM$ à partir de l'oxyde ou du sulfure de dihydrocarbyl phosphine $R_1R_2PZH$ correspondant puis, dans une seconde étape, à faire réagir ledit dihydrocarbyl (thio)phosphinite alcalin sur un halogénure organique de formule $R_3X$ caractérisé en ce que la première étape est réalisée par action d'un amidure alcalin de formule $MNH_2$ sur ledit oxyde ou sulfure de dihydrocarbyl phosphine, la seconde étape étant réalisée en présence de la partie dudit amidure alcalin n'ayant pas réagi.

Selon une variante du procédé selon l'invention l'amidure alcalin est exalté sous forme d'associations moléculaires à base d'alcoolate de métal alcalin, à base de sel choisi dans le groupe constitué par les thiocyanates, les cyanates, les nitrites et les cyanures de sodium, de lithium ou de potassium ou à base de composé organo-alcalin.

Comme amidure alcalin on utilise de préférence l'amidure de lithium, de sodium ou de potassium, avec une préférence particulière pour l'amidure de sodium qui est le moins couteux. Comme oxyde ou sulfure de dihydrocarbyl phosphine de formule

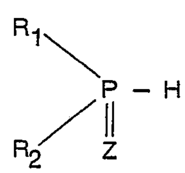

où $Z = S$ ou O, on peut notamment utiliser ceux dans lesquels $R_1$, $R_2$ sont identiques ou différents et sont un groupe alkyle linéaire ou ramifié de $C_1$ à $C_{18}$, de préférence de $C_1$ à $C_{12}$, un groupe arylalkyle de $C_7$ à $C_{10}$, un groupe phényle ou un groupe aryle de $C_7$ à $C_{12}$, un groupe alkaryle de $C_7$ à $C_{10}$, ou bien les $R_1$ et $R_2$ pris ensemble forment une chaîne polyméthylène de $C_4$ à $C_9$ ou une chaîne hydrocarbonée comportant au moins une insaturation éthylénique, de $C_4$ à $C_9$.

Comme halogénure organique de formule $R_3X$ on peut utiliser notamment ceux dans lesquels $X = Cl$, Br ou I et de préférence ceux où $X = Cl$, ou Br et ceux dans lesquels $R_3$ est un groupe aromatique éventuellement substitué par d'autres X et comportant de 6 à 14 atomes de carbone ou bien un groupe $CH_2R_4$ où $R_4$ est un groupe alkyle primaire linéaire ou ramifié comportant de 1 à 18 atomes de carbone, un groupe aralkyle primaire de 7 à 14 atomes de carbone, un groupe alkaryle comportant de 7 à 14 atomes de carbone, un groupe alkylène primaire comportant de 3 à 18 atomes de carbone, une insaturation n'étant pas directement liée à X, ou bien un groupe $—CH_2X$ où X à l'une des valeurs précédentes ou bien un groupe $—CH_2R_5X$ où X à l'une des valeurs précédentes et où $R_5$ est une chaîne hydrocarbonée comportant de 1 à 18 atomes de carbone ou bien un groupe

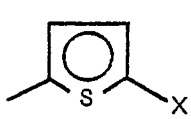

où X à l'une des valeurs précédentes ou bien encore un groupe macromoléculaire réticulé ou de masse comprise entre 500 et 1000000 comportant au moins un autre groupe X porté par un noyau aromatique ou un carbone primaire d'une chaîne aliphatique.

D'une manière plus générale l'invention est applicable à toute condensation d'un (thio)phosphinite alcalin sur un dérivé organique halogéné ou polyhalogéné comprenant au moins un atome d'halogène sous forme d'un groupe halogénoaryle ou d'un groupe halogénométhyle.

Si le dérivé organique halogéné est une macromolécule il peut notamment être choisi dans le groupe constitué par le polystyrène chlorométhyle, le poly(p-bromostyrène), le poly(p-chlorostyrène), le polybutadiène bromé, les copolymères comprenant ces derniers polymères tels qu'une résine de Merrifield, c'est à dire un copolymère statistique de styrène et de p-halogénométhyl styrène, éventuellement partiellement réticulé, par ailleurs décrit de manière détaillée dans la demande EP—A—0 031 761 déposée au nom de la Demanderesse. Un autre exemple est le polymère porteur de groupes bromo polyméthylène, dérivé du polystyrène, obtenu par Tundo et décrit par cet auteur dans Chemical Communications 1978, 315.

La proportion molaire d'amidure alcalin à utiliser par rapport à l'oxyde (ou sulfure) de dihydrocarbyl phosphine est au moins égale à la proportion stoechiométrique et de préférence comprise entre 1,1 et 6 fois cette proportion stoechiométrique, 20 fois appraissant comme au maximum. Autrement exprimé, on utilise selon l'invention entre 1 et 20 moles, et de préférence de 1,1 à 6 moles, d'amidure alcalin par mole d'oxyde (sulfure) de dihydrocarbyl phosphine.

La proportion d'oxyde (de sulfure) de dihydrocarbyl phosphine à utiliser par rapport au dérivé organique halogéné est généralement conforme à la stoechiométrie, soit une mole d'oxyde (ou de sulfure) par mole d'halogène. Toutefois, selon que l'on souhaite ou non réaliser la complète substitution des atomes d'halogène du dérivé organique halogène on peut employer entre 0,1 et 20, de préférence entre 0,5 et 3 moles d'oxyde (ou de surfure) par mole d'halogène, à un plus grand excès d'oxyde (ou de sulfure) correspondant un taux de substitution particulièrement élevé notamment dans le cas de dérivés halogénés macromoléculaires.

Quoique la présence d'un solvant ne soit pas apparue comme indispensable au cours de chaque étape du procédé selon l'invention, elle est cependant tout à fait souhaitable. On peut notamment utiliser comme milieu solvant un solvant ou un mélange de solvants inertes aprotiques non polaires ou polaires. Un solvant convenant bien est le tétrahydrofuranne mais on peut utiliser des solvants moins polaires tels que les hydrocarbures aliphatiques ou aromatiques, notamment le toluène, les xylènes et l'hexane. Les solvants fragiles en milieu fortement basique et les solvants halogénés doivent être évités, de préférence.

La température du milieu réactionnel au cours de chacune des étapes est avantageusement la température ambiante ce qui tranche d'avec la plupart des procédés antérieurs. On n'obtient des résultats valables au cours de la première étape qu'en adoptant une température comprise entre —20° et +70°C, de préférence entre 15 et 50°C. Pour la seconde étape, on opère avantageusement entre —20° et +100°C, de préférence entre 10 et 60°C. Dans ces conditions la première étape peut être achevée dans un intervalle de temps compris entre quelques minutes et 3 heures et la seconde étape dans l'espace de quelques minutes à une dizaine d'heures pour les cas les plus rebelles où l'encombrement stérique est très important autour de l'atome d'halogène ou autour de la fonction (thio)phosphinite.

D'une manière générale il y a intérêt à effectuer la réaction à l'aide de réactifs convenablement séchés et sous atmosphère inerte, encore que l'amidure alcalin peut jouer un rôle de dessèchant efficace et bon marché sans que le procédé en pâtisse. Il y a toutefois lieu, dans ce dernier cas, de prévoir un excès supplémentaire d'amidure alcalin suffisant pour neutraliser l'humidité résiduelle constatée dans le milieu.

Conformément à l'invention il est possible d'utiliser de l'amidure alcalin sous une forme exaltée. On sait que les amidures alcalins forment avec un très grand nombre de dérivés hydroxylés des bases tres réactives qui ont été appelées bases complexes. Les brevets français 2 354 834 et 2 410 005 délivrés à la Demanderesse illustrent d'une manière très complète les principales bases complexes connues et industriellement utilisables. Conformément à l'invention on forme la base complexe de manière connue et on ajoute l'oxyde ou le sulfure de dihydrocarbyl phosphine à cette base complexe, après quoi on réalise la seconde étape comme décrit plus haut. Comme bases complexes particulièrement préférées dans le cadre de l'invention on peut citer celles préparés à partir d'amidure de sodium et d'alcool aliphatique tertiaire, secondaire ou primaire ou des monoéthers de polyoxyéthylène glycols.

On sait aussi que les amidures alcalins forment avec les thiocyanates, les cyanates, les nitrites et les cyanures des principaux métaux alcalins des bases très réactives qui ont été appelées bases salines. Le brevet français 2430 428 délivré à la demanderesse illustre d'une manière très complète la manière de préparer de telles bases salines. Conformément à l'invention on forme la base saline de manière connue et on ajoute l'oxyde ou le sulfure de phosphine secondaire à cette base saline, après quoi on réalise la deuxième étape comme décrit plus haut. Comme bases salines particulièrement préférées on peut citer celles préparées à partir d'amidure de sodium et de thiocyanate de potassium ou, dans une moindre mesure de nitrite de potassium.

Conformément à l'invention il est également possible d'exalter l'amidure alcalin sous la forme d'une association moléculaire avec un composé organo-alcalin du type décrit et revendiqué dans une demande de brevet déposée en France le même jour que la présente demande et intitulée "Nouvelles associations de bases résultant de l'association d'un alkyl ou aryllithien avec un amidure ou un hydrure alcalin, procédé de polymérisation les utilisant et produit obtenu" (n° 2 498 190).

Ces associations moléculaires sont toutes utilisables dans le cadre de la présente invention. Toutefois on préfère plus particulièrement celles faisant intervenir un effet supplémentaire de cations,

consistant à mélanger un alkyl-alcalin avec un amidure d'un autre métal alcalin. Ainsi l'amidure de sodium étant l'amidure préféré, on lui associe avantageusement un alkyl-lithium tel que n-butyl-lithium. Conformément à l'invention on forme l'association moléculaire amidure alcalin-organo-alcalin comme décrit dans la demande sus-mentionnée et on ajoute le (thio)phosphinite alcalin à ladite association ou vice versa après quoi on réalise la seconde étape comme décrit plus haut.

Les rendements du procédé selon l'invention sont généralement très élevés et dépendent assez fortement de divers choix: nature de l'amidure utilisé, température de réaction, solvant utilisé, nature des groupements hydrocarbonés portés par l'oxyde ou le sulfure phosphine secondaire, nature du dérivé organique halogéné. Par ailleurs, lorsque le dérivé organique halogéné est un polymère il n'est pas toujours intéressant d'obtenir un taux de substitution très élevé.

L'invention concerne également, à titre de produits industriels nouveaux, des polymères porteurs de groupes $R_1R_2PZ$ — (avec Z = S ou O), dérivés de polymères halogénés dans lesquels les halogènes sont peu activés dans la perspective de leur condensation avec un (thio) phosphinite alcalin. Ces polymères n'avaient pu être obtenus jusqu'à présent par les procédés connus et dérivent respectivement de polystyrènes p-halogénés et de polystyrènes éventuellement partiellement réticulés. Lesdits polymères sont porteurs de groupes du type $-(CH_2)_p-X$, et sont de formules générales (I) et (II):

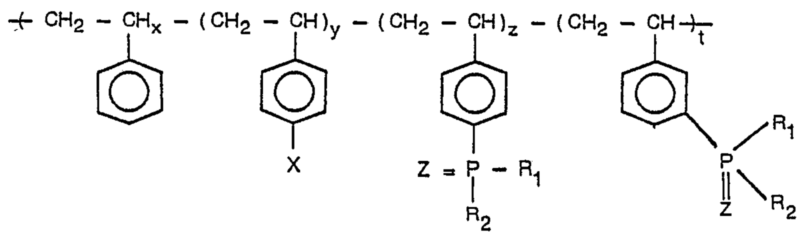
(I)

dans lesquels x, y, z et t sont des nombres tels que x + y + z + t = 1, 0 < x < 0,9, 0 < y < 0,5, 0,03 < z < 1,0 et 0 < t/z < 0,4 Z' étant un atome d'oxygène ou de soufre, X étant un atome de chlore ou de brome, $R_1$ et $R_2$ étant des groupes alkyl linéaires ou ramifiés de $C_1$ à $C_{18}$, de préférence des groupes de $C_1$ à $C_{12}$ et notamment tous deux dex groupes octyle, pour une masse moléculaire en nombre $\overline{Mn}$, 20000 < $\overline{Mn}$ < 1000000.

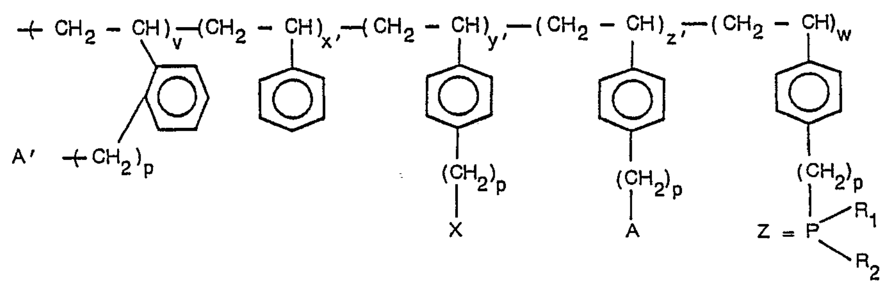

dans lesquels 2 < p < 12, v, w, x', y', z' sont des nombres tels que v + w + x' + y' + z' = 1, v/y' + z' + w < 0, 1, 0 < x' < 0,7, 0 < y' < 0,4, 0 < z' < 0,1, et 0,03 < w < 0,9, ou X = Cl ou Br, Z = O ou S, $R_1$ et $R_2$ sont identiques ou différents et sont un groupe alkyl linéaire ou ramifié de $C_1$ à $C_{18}$, de préférence de $C_1$ à $C_{12}$, un groupe arylalkyle de $C_7$ à $C_{10}$, A est un noyau phényle d'une chaîne polystyrène du même type, les A' étant les uns un groupe X, les autres un groupe —$PZR_1R_2$,Z, X, $R_1$ et $R_2$ ayant les significations précédentes.

Les différents aspects de l'invention ainsi que les progrès qu'elle permet de réaliser seront mieux compris à l'aide des exemples non limitatifs suivants.

Exemples 1 à 9

Synthèse d'oxydes de phosphines tertiaires Dans un réacteur de 250 ml muni d un agitateur on a préparé la base complexe $NaNH_2$/t Bu ONa de manière classique en plaçant dans le réacteur 100 mmoles de $NaNH_2$, 35 mmoles d'alcool t-butylique et 30 ml de tétrahydrofuranne. Le mélange hétérogène a été chauffé pendant 30 minutes à 40°C, tout en agitant puis on a maintenu ledit mélange encore 30 minutes à cette même température après quoi on a coulé 33 mmoles de dioctylphosphine oxyde (DOPO) en solution dans 50 ml de THF sur ledit mélange. Au bout de deux heures après le début de l'introduction, la réaction est achevée et la présence de phosphinite de sodium ainsi que la disparition du DOPO sont constatées par spectre I.R. Ce temps de réaction est beaucoup plus court que celui nécessaire par la voie sodium métallique et il est de plus inutile de chauffer le mélange réactionnel au reflux du solvant.

On a ensuite réalisé la seconde étape du procédé en faisant réagir divers composés organiques halogénés dans des fractions de la solution du phosphinite alcalin obtenue lors de la première étape. La proportion molaire phosphinite alcalin/fonction dérivé halogéné était respectivement de 1 pour les exemples 1 à 9.

Les résultats obtenus sont groupés dans le tableau suivant:

| Ex. N° | Dérivé halogéné | Produit obtenu (et rendement en %) | Observations |
|---|---|---|---|
| 1 | 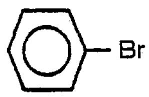 | 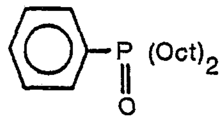<br>( > 50 ) ( a ) | F = 41–42 °C (litt. 42–43 °C)<br>Analyse par RMN $^{13}C$. |
| 2 | $n\text{-}C_8H_{17}Cl$ | $(C_8H_{17})_3PO$<br>( > 60 ) ( a ) | F = 51 °C (litt. 51–51,5 °C)<br>Analyse par RMN $^{13}C$. |
| 3 | $Cl(CH_2CH_2O)_3Bu$ | $(Oct)_2\underset{\underset{O}{\|}}{P}-CH_2-\underset{\underset{O}{\|}}{P}(Oct)_2$<br>(45) (a) | F = 152 °C (litt. 152–152,50 °C)<br>Analyse par spectre de masse |
| 4 | $Br(CH_2)_3Br$ | $(Oct)_2\underset{\underset{O}{\|}}{P}(CH_2)_3\underset{\underset{O}{\|}}{P}(Oct)_2$<br>( > 65) (a) | F = 91 °C (litt. 145–150 °C) (b)<br>Analyse par spectre de masse<br>Analyse par RMN $^{13}C$.<br>Analyse élémentaire :<br>C H O P<br>Tr. 70,93 12,14 5,07 10,47<br>Th. 71,43 12,59 5,44 10,54 |
| 5 | $Br(CH_2)_4Br$ | $(Oct)_2\underset{\underset{O}{\|}}{P}(CH_2)_4\underset{\underset{O}{\|}}{P}(Oct)_2$<br>(80) | (c) |
| 6 | $Br(CH_2)_5Br$ | $(Oct)_2\underset{\underset{O}{\|}}{P}(CH_2)_5\underset{\underset{O}{\|}}{P}(Oct)_2$<br>(82) | (c) |
| 7 | $Br(CH_2)_6Br$ | $(Oct)_2\underset{\underset{O}{\|}}{P}(CH_2)_6\underset{\underset{O}{\|}}{P}(Oct)_2$<br>(78) | (c) |
| 8 | 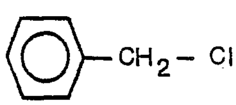 | 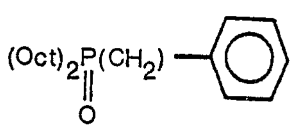<br>( > 50) (a) | F = 55 °C. Confirmation par RMN $^{13}C$. |
| 9 | 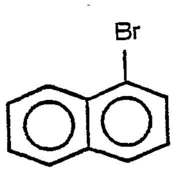 | 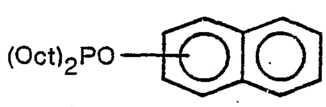<br>(75) | (d) |

(a) en produit non recristallisé

(b) la valeur de la littérature est mise en question du fait de la cohérence des spectres avec les analyses spectrales et élémentaires

(c) structure confirmée à la fois par spectre de masse et RMN$^{13}C$.

(d) on a obtenu 25% du dérivé $\alpha$-naphtyl et 75% du dérivé Pa naphtyl, séparés par chromatographie sur colonne d'alumine.

Le même processus a été appliqué au chloro-2 propane, au bromo-2 propane, au bromo-butane, au chlorure de t-butyle ainsi qu'au bromure de cyclohexyle (exemples 10 à 14). Aucune réaction n'a été observée de sorte que le procédé n'est essentiellement applicable qu'aux dérivés halogénés aromatiques ou aux dérivés aliphatiques ou araliphatiques où au moins un atome d'halogène est portée par un carbone primaire. Ainsi le procédé a été appliqué avec succès sur Br $CH_2Br$ et

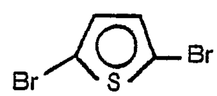

avec lesquels on a toutefois obtenu des produits entièrement phosphorés attendus en mélange avec des produits monosubstitués, ceci s'expliquant par le maintien du rapport DOPO/X susmentionné (exemples 15 et 16).

Par ailleurs le procédé s'est révélé applicable avec les sulfures de phosphines secondaires, notamment $Ph_2PSH$, les rendements étant moins bon et les mélanges étant plus facilement obtenus qu'avec les oxydes, toutes conditions égales par ailleurs.

Exemples 17 à 20:

Synthèse de polystyrènes porteurs de groupes dioctylphosphine oxyde.

On a repris le mode opératoire des exemples précédents, en utilisant comme dérivé halogéné, des polystyrènes bromés de formule:

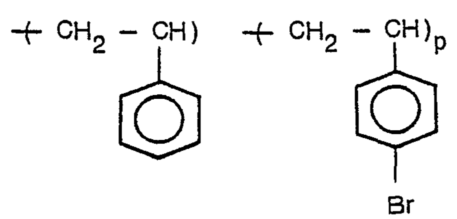

Le polymère A contenait 12,48% en poids de Br, soit p = 18,5% et possédait une $M_n$ = 133 000 (par osmométrie).

Le polymère B contenait 18,8% en poids de Br, soit p = 30%, et possédait une $M_n$ = 50 000 (par chromatographie par perméation de gel).

Le polymère C, de masse $M_n$ = 184 000 (osm.) comprenait 77,43% de C, 6,58% de H et 14,06% en poids de Br, soit p = 21,2%.

Le polymère D, de masse $M_n$ = 130 000 (osm.) comprenait 66,84% de C, 5,42% de H, 27,24% de Br, soit p = 48,4%.

Ces polymères sont obtenus par bromation dans $CCl_4$ en présence de $FeCl_3$ anhydre de polystyrène lui-même obtenu par polymérisation anionique du monomère amorcée par le naphtalène-sodium, dans le THF, à basse température.

On a fait réagir sur des solutions des polymères A à D dans le THF, une solution de phosphinite alcalin obtenue selon le même processus qu'aux exemples 1 à 9: on a indiqué pour chaque essai le temps de réaction respecté et le rapport équivalent DOPO/équivalent Br.

On a obtenu des polystyrènes bromés et greffés par des groupes oxyde de dioctylphosphine en solution dans le THF. Les polymères ont été récupérés par précipitation dans le méthanol ce qui a éliminé l'excès de DOPO présent.

Ces polymères qui sont solubles dans le THF, le toluène et le chloroforme ont pour formule:

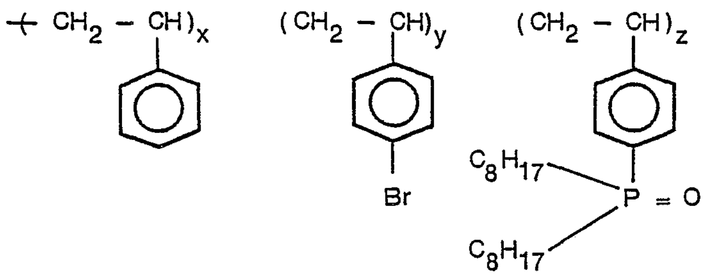

Les caractéristiques des polymères obtenus sont groupés dans le tableau suivant:

| Ex. N° | Rapport Molaire DOPO/Br | Durée (h) | Mn (osm.) | % C | % H | % O | % P | % Br | % y | % z |
|---|---|---|---|---|---|---|---|---|---|---|
| 17 | 14 | 4 | 187000 | – | – | – | 3,25 | 2,52 | 4,5 | 15,8 |
| 18 | 6 | 4 | – | – | – | – | 4,54 | 1,50 | 3,3 | 26,0 |
| 19 | 6 | 4 | 265000 | 83,99 | 8,94 | 2,25 | 3,47 | 1,56 | 3,0 | 17,1 |
| 20 | 1,2 | 4 | 140000 | 69,09 | 6,04 | | 0,85 | 23,13 | 43,1 | 4,1 |

Les exemples 17 à 20 ont été effectués respectivement à l'aide des polymères A, B, C et D. On a pu montrer par RMN qu'une faible partie (moins de 30% du total) des groupes dioctylphosphine oxyde, étaient fixés en position méta des groupes phényle.

On voit que l'élévation du taux de substitution du Br par les groupes phosphorés est favorisée par une élévation de l'excès d'oxyde de phosphine secondaire. On peut faire varier ce taux facilement de 10 à 90% d'après les exemples précédents.

Exemples 21 et 22:

Synthèse de polymères réticulés porteurs de groupes DEPO et DOPO

On a appliqué le mode opératoire des exemples 17 à 20 (mais à 50°C) à un polystyrène bromé macroporeux commercialisé par la société ALDRICH sous le nom de Brominated macroporous Polystyrene. Cette résine réticulée à l'aide de 3% de divinylbenzène contient de 3 à 4,5 milliéquivalents Br par gramme.

On a fait gonfler 10 g de cette résine dans 100 ml de THF pendant 24 heures avant d'appliquer le procédé selon l'invention.

On a utilisé un rapport oxyde de phosphine secondaire/halogénure de 6 sur la base de 4,5 m.éq. Br par g de résine.

On a utilisé respectivement l'oxyde de diéthylphosphine (DEPO) et l'oxyde de dioctylphosphine (DOPO) dans les essais 21 et 22. Les temps de réaction sont de 4 heures.

On a obtenu des polystyrènes, réticulés porteurs de groupes p-bromophényle résiduels et de groupes dialkylphosphine oxyde en position para de groupes phényle. Les caractéristiques chimiques de ces polymères figurent dans le tableau suivant.

| Ex. N° | Motif phosphoré | Br % en poids | P % en poids | m. éq. P par g de résine | Taux de substitution |
|---|---|---|---|---|---|
| 21 | 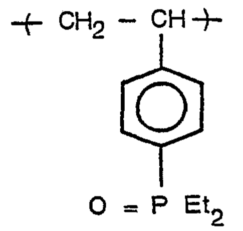 | 27,93 | 1,78 | 0.57 | 6,0 % |
| 22 | 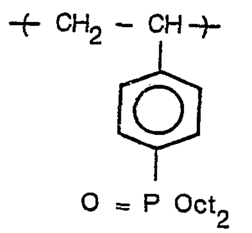 | 23,86 | 1,65 | 0.53 | 6,5 % |

Les taux de substitution obtenus, bien que faibles, n'en sont pas moins remarquables du fait qu'il était extrêmement difficile jusqu'à présent d'obtenir une amorce de substitution à l'aide de méthodes classiques, dans le cas de polymères aussi réticulés que ceux utilisés dans les deux essais 21 et 22.

Exemple 23:

Dans un réacteur de 250 ml, on a placé 4 g d'amidure de sodium et 50 ml de THF. Le milieu obtenu ayant été porté à 40°C on a coulé dans la réacteur agité, 9 g de DOPO en l'espace de 30 minutes.

La température étant maintenue à 40°C, on a coulé en 30 minutes sur le mélange ainsi obtenu 16,5 mM de dibromo-1,4 butane, soit un rapport équ. DOPO/équ. Br de 1. On a laissé la réaction s'achever une demi-heure à 40°C et on a précipité le mélange réactionnel dans l'eau. La phase organique a été extraite dans 100 ml de chloroforme et on a recueilli après évaporation 9,3 g de produit brut (rendement 94%). On a recristallisé le produit dans l'hexane et recueilli 6,8 g de produit (rendement 69%) présentant un point de fusion de 95°C. Le produit a été identifié par ses spectres I.R. et RMN comme répondant à la formule $(Oct)_2PO(CH_2)_4PO(Oct)_2$.

Exemples 24 et 25:

L'exemple précédent montre que dans le THF, l'amidure de sodium seul est aussi réactif vis à vis de l'oxyde de phosphine secondaire que l'amidure exalté sous forme de base complexe (cf. exemple 5).

Dans un solvant peu polaire, sensiblement moins polaire que le THF, on a réalisé une étude cinétique comparative de la réaction du DOPO sur le chlorure d'octyle en présence d'amidure seul d'une part, d'amidure exalté sous forme de base complexe, d'autre part.

Les quantités initiales sont celles de l'exemple 1 (33 mmoles d'amidure de sodium dans les deux cas, 33 mmoles de monoéthyl éther de diéthylène glycol) et le solvant était le toluène.

Le chlorure d'octyle était présent à raison d'un excès de 15% en mole par rapport au DOPO. La réaction a été suivie en chromatographie en phase gazeuse. Les résultats obtenus sont regroupés dans le tableau suivant:

| Ex. N° | Réactif | Taux de conversion (en %) après 0,5 h | 1,0 h | 1,5 h | 2,0 h | 2,5 h |
|---|---|---|---|---|---|---|
| 24 | $NaNH_2$ seul | 6 | 11 | 15 | 20 | 28 |
| 25 | $NaNH_2$ + $Et(O{-}CH_2{-}CH_2)_2{-}ONa$ | 9 | 40 | 59 | 78 | 82 |

On voit que l'utilisation d'amidure exalté permet d'accélérer la réaction lorsque celle-ci est pratiquée dans un solvant peu polaire.

Exemples 26 à 33:

On a utilisé ici de l'amidure de sodium exalté à l'aide de composé organo-alcalin. On a pour cela d'abord préparé l'association amidure alcalin-organo alcalin dans 50 ml de solvant (THF ou toluène, voir tableau), à température ordinaire, en introduisant dans un réacteur de 250 ml, 25 mmoles d'amidure de sodium et 23 mmoles de butyl-lithium (exemples 26 à 31) ou 25 mmoles de méthyl-lithium (exemple 32) ou 25 mmoles de phényl-lithium (exemple 33). On a ensuite coulé immédiatement dans le mélange obtenu, en dix minutes et sous agitation, 20 mmoles d'oxyde de phosphine secondaire (oxyde de diphényl phosphine pour les exemples 26 à 31 et oxyde de dioctyl phosphine pour les exemples 32 et 33). L'addition étant terminée, on a laissé le mélange pendant encore 2 heures sous agitation à 20°C. Au mélange réactionnel obtenu, on a ajouté en 2 heures, sous agitation et toujours à 20°C, le dérivé organique halogéné indiqué dans le tableau (10 mmoles). Les résultats obtenus sont rapportés dans le tableau suivant:

| Ex. | Dérivé halogéné | Solvant | Produit obtenu | Caractérisation |
|---|---|---|---|---|
| 26 | $Br-CH_2-Br$ | THF | $Ph_2POCH_2POPh_2$ | par SM (a) |
| 27 | $Br(CH_2)_3Br$ | THF | $Ph_2PO(CH_2)_3POPh_2$ | par SM (a) |
| 28 | $Br(CH_2)_4Br$ | THF | $Ph_2PO(CH_2)_4POPh_2$ | par SM (a) |
| 29 | $Br(CH_2)_5Br$ | THF | $Ph_2PO(CH_2)_5POPh_2$ | par RMN (b) |
| 30 | $Br(CH_2)_6Br$ | THF | $Ph_2PO(CH_2)_6POPh_2$ | par RMN (b) |
| 31 | 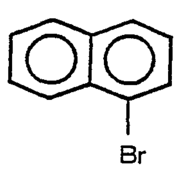 | $PhCH_3$ | 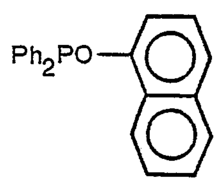 et 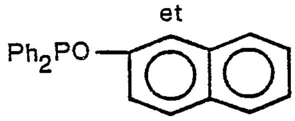 | par RMN (b) et SM (a) |
| 32 | 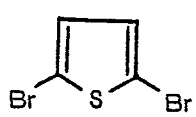 | $PhCH_3$ | 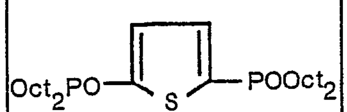 | par RMN (b) et SM (a) |
| 33 | $Br(CH_2)_6Br$ | $PhCH_3$ | $Oct_2PO(CH_2)_6POOct_2$ | par RMN (b) et SM (a) |

Exemple 34:

Dans un réacteur de 250 ml on a placé 4 g (100 mmoles) d'amidure de sodium dans 30 ml de toluène, on a chauffé ce mélange pendant 2h à 40°C puis on a ajouté 9 g (33 mmoles) de DOPO dans 60 ml de toluène et on a chauffé pendant 2 heures à 40°C, sous agitation.

Le spectre IR. du mélange obtenu montre que du dioctylphosphinite de sodium a été formé.

On rajoute au mélange réactionnel 33 mmoles de Br $(CH_2)_4$ Br et on laisse réagir sous agitation pendant 1 h à 40°C. Le taux de conversion obtenu au bout de ce délai est de 20%.

Exemples 35 et 36:

On a placé dans un réacteur de 250 ml, 100 mmoles d'amidure de sodium et 50 mmoles de thiocyanate de sodium dans 30 ml de toluène. On a agité le mélange pendant 2 h à 40°C, après quoi on a ajouté au milieu obtenu une solution de 35 mmoles de DOPO dans 60 ml de toluène. Le mélange

réactionnel a été agité pendant 2 h à 40°C. On a alors obtenu une composition contenant du dioctyl phosphinite de sodium, ne présentant pas de bande P—H en Infra-Rouge (pas d'oxyde de phosphine résiduel).

A cette composition on a ajouté 33 mmoles d'équivalent brome de Br $(CH_2)_4$ Br et on a laissé réagir pendant 1 h à 40°C.

Le milieu réactionnel obtenu a été précipité dans l'eau et la phase organique extraite au chloroforme puis séchée par $MgSO_4$. Après évaporation du solvant puis recristallisation dans l'hexane, on a obtenu 6,3 g de di(dioctyl phosphine oxyde)-1,4 butane, soit un rendement de 65% en produit purifié (point de fusion 99—99,5°C).

On a obtenu un résultat comparable en remplaçant KSCN par $NaNO_2$ (le rendement est légèrement moindre).

**Revendications**

1. Procédé de synthèse d'oxydes et de sulfures de phosphines tertiaires de formule $R_1R_2R_3PZ$, avec Z = S ou O, $R_1$ et $R_2$ des radicaux hydrocarbyles et $R_3$ un radical organique, consistant dans une première étape à obtenir un dihydrocarbyl (thio)phosphinite alcalin de formule $R_1R_2PZM$ à partir de l'oxyde ou de sulfure de dihydrocarbyl phosphine $R_1R_2PZH$ correspondant puis, dans une seconde étape, à faire réagir ledit dihydrocarbyl (thio)phosphinite alcalin sur un halogénure organique de formule $R_3X$ caractérisé en ce que la première étape est réalisée par action d'un amidure alcalin de formule $MNH_2$ sur ledit oxyde ou sulfure de dihydrocarbyl phosphine, la seconde étape étant réalisée en présence de la partie dudit amidure alcalin n'ayant pas réagi.

2. Procédé selon la revendication 1 caractérisé en ce que l'amidure alcalin est exalté sous forme d'associations moléculaires à base d'alcoolate de métal alcalin, à base de sel choisi dans le groupe constitué par les thiocyanates, les cyanates, le nitrite et les cyanures de sodium, de lithium ou de potassium ou à base de composé organo-alcalin.

3. Procédé selon la revendication 1 ou 2 caractérisé en ce que l'halogénure organique de formule $R_3X$ est un dérivé organique halogéné ou polyhalogéné comprenant au moins un atome d'halogène sous forme d'un groupe halogénoaryle ou d'un groupe halogénométhyle.

4. Procédé selon la revendication 3 caractérisé en ce que l'halogénure organique de formule $R_3X$ est tel que X = Cl, Br ou I, et tel que $R_3$ soit un groupe aromatique éventuellement substitué par d'autres X et comportant de 6 à 14 atomes de carbone ou bien un groupe $CH_2R_4$ où $R_4$ est un groupe alkyle primaire linéaire ou ramifié comportant de 1 à 18 atomes de carbone, un groupe aralkyle primaire de $C_7$ à $C_{14}$, un groupe alkaryle comportant de 7 à 14 atomes de carbone, un groupe alkylène primaire comportant de 3 à 18 atomes de carbone, une insaturation n'étant pas directement liée à X, ou bien un groupe $—CH_2X$ où X à l'une des valeurs précédentes ou bien un groupe $—CH_2R_5X$ où X à l'une des valeurs précédentes et où $R_5$ est une chaîne hydrocarbonée comportant de 1 à 18 atomes de carbone ou bien un groupe

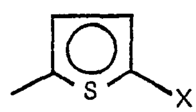

où X à l'une des valeurs précédentes ou bien encore un groupe macromoléculaire réticulé ou de masse comprise entre 500 et 1000000 comportant au moins un autre groupe X porté par un noyau aromatique ou un carbone primaire d'une chaîne aliphatique.

5. Procédé selon la revendication 4 caractérisé en ce que l'halogénure organique est un polymère choisi dans le groupe constitué par le polystyrène chlorométhylé, le polystyrène porteur de groupes bromométhylène, le poly(p-bromostyrène), le poly (p-chlorostyrène), le polybutadiène bromé et les copolymères comprenant ces derniers polymères tels qu'une résine de Merrifield.

6. Procédé selon l'une quelconque des revendications précédentes caractérisé en ce que l'oxyde ou le sulfure de dihydrocarbyl phosphine $R_1R_2PZH$ où Z = S ou O est tel que $R_1$, $R_2$ sont identiques ou différents et sont un groupe alkyle linéaire ou ramifié de $C_1$ à $C_{18}$, de préférence de $C_1$ à $C_{12}$, un groupe arylalkyle de $C_7$ à $C_{10}$, un groupe phényle ou un groupe aryle de $C_7$ à $C_{12}$ ou un groupe alkaryle de $C_7$ à $C_{10}$, ou bien les $R_1$ et $R_2$ pris ensemble forment une chaîne polyméthylène de $C_4$ à $C_9$ ou une chaîne hydrocarbonée comportant au moins une insaturation éthylique de $C_4$ à $C_9$.

7. Procédé selon l'une quelconque des revendications précédentes caractérisé en ce qu'on utilise entre 1 et 20 moles, de préférence de 1,1 à 6 moles d'amidure alcalin par mole d'oxyde ou sulfure de dihydrocarbyl phosphine.

8. Procédé selon l'une quelconque des revendications précédentes caractérisé en ce qu'on utilise entre 0,1 et 20 moles, de préférence de 0,5 à 3 moles d'oxyde ou de sulfure de dihydrocarbyl phosphine par mole d'halogène.

9. Procédé selon l'une quelconque des revendications précédentes, caractérisé en ce qu'on effectue la réaction en présence d'un solvant inerte et entre −20° et +70°C, de préférence entre 15 et 50°C, pour la première étape et entre −20° et +100°C, de préférence entre 10 et 60°C, pour la seconde étape.

10. Procédé selon la revendication 2 et l'une quelconque des revendications 3 à 9 caractérisé en ce que l'association moléculaire à base d'alcoolate de métal alcalin est une base complexe préparée à partir d'un alcool aliphatique tertiaire, secondaire ou primaire ou de monoéthers de polyoxyéthylène glycols.

11. Procédé selon la revendication 2 et l'une quelconque des revendications 3 à 9 caractérisé en ce que l'association moléculaire est à base de thiocyanate ou de nitrite de potassium et à base d'amidure de sodium.

12. Procédé selon la revendication 2 et l'une quelconque des revendications 3 à 9, caractérisé en ce que l'association moléculaire est obtenue par mélange d'un alkyl-alcalin avec un amidure d'un autre métal alcalin.

13. A titre de produit nouveau le polystyrène substitué, de formule

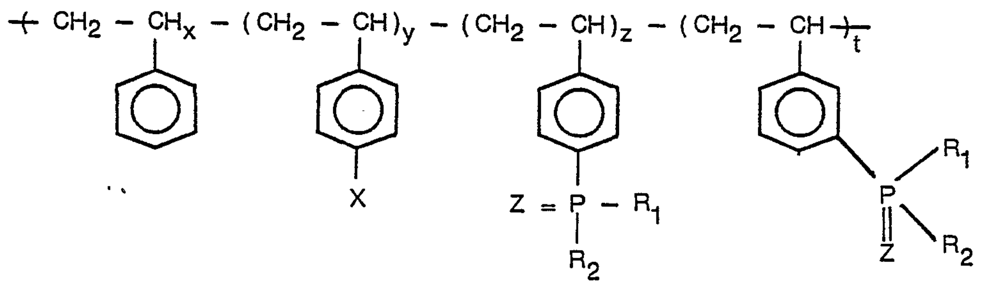 (I)

dans lequel x, y et z sont des nombres tels que $x + y + z + t = 1$, $0 < x < 0,9$, $0 < y < 0,5$, $0,03 < z < 1,0$ et $0 < t/z < 0,4$,Z étant un atome de soufre ou d'oxygène, X étant un atome de chlore ou de brome, $R_1$ et $R_2$ étant des groupes alkyl linéaires ou ramifiés de $C_1$ à $C_{18}$, de préférence des groupes de $C_1$ à $C_{12}$ et notamment tous deux des groupes octyle, pour une masse moléculaire en nombre $\overline{Mn}$, $20000 < \overline{Mn} < 1000000$.

14. A titre de produit nouveau le polystyrène substitué de formule

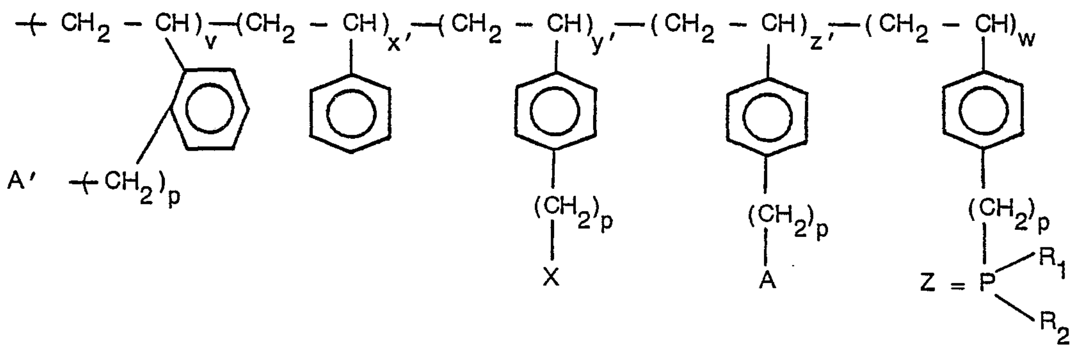

dans lequel $2 < p < 12$, v, w, x', y', z' sont des nombres tels que $v + w + x' + y' + z' = 1$, $v/y' + z' + w < 0,1$, $0 < x' < 0,7$, $0 < y' < 0,4$, $0 < z' < 0,1$, et $0,03 < w < 0,9$, où X = Cl ou Br, Z = O ou S, $R_1$ et $R_2$ sont identiques ou différents et sont un groupe alkyl linéaire ou ramifié de $C_1$ à $C_{18}$, de préférence de $C_1$ à $C_{12}$, un groupe arylalkyle de $C_7$ à $C_{10}$, A est un noyau phényle d'une chaîne polystyrène du même type, les A' étant les uns un groupe X, les autres un groupe $—PZR_1R_2$,Z, X, $R_1$ et $R_2$ ayant les significations précédentes.

## Patentansprüche

1. Verfahren zur Herstellung von tertiären Phosphinoxiden und -sulfiden der Formel $R_1R_2R_3PZ$, wobei Z = S oder O, $R_1$ und $R_2$ Kohlenwasserstoffreste sind und $R_3$ ein organischer Rest ist, bestehend darin, daß man in einer ersten Stufe ein alkalisches Dihydrocarbyl-(thio)-phosphinit der Formel $R_1R_2PZM$ aus dem entsprechenden Dihydrocarbylphosphinoxid oder -sulfid $R_1$ $R_2PZH$ erhält und dann in einer zweiten Stufe das genannte alkalische Dihydrocarbyl-(thio)phosphinit mit einem organishcen Halogenid der Formel $R_3X$ umsetzt, dadurch gekennzeichnet, daß man in der ersten Stufe ein alkalisches Amid der Formel $MNH_2$ mit dem genannten diHydrocarbylphosphinoxid oder -sulfid umsetzt und die zweite Stufe in Gegenwart des nicht-umgesetzten Teils des gananten alkalischen Amids durchführt.

2. Verfahren nach Anspruch 1, dadurch gekennzeichnet, daß man das alkalische Amid in Form von Molekülassoziationen mit Alkoholaten von alkalischen Metallen, mit Salzen aus der aus Thiocyanaten, Cyanaten, Nitrit und Cyaniden von Natrium, Lithium oder Kalium bestehenden Gruppe oder mit alkalischen organischen Verbindungen verwendet.

3. Verfahren nach Anspruch 1 oder 2, dadurch gekennzeichnet, daß das organischen Halogenid der Formel $R_3X$ ein organisches halogeniertes oder polyhalogeniertes Derivat ist, das mindestens ein. Halogenatom in Form einer Halogenarylgruppe oder Halogenmethylgruppe enthält.

4. Verfahren nach Anspruch 3, dadurch gekennzeichnet, daß das organische Halogenid der Formel $R_3X$ so ist, daß $X = Cl$, Br oder J ist und $R_3$ ein aromatischer Rest, der gegebenenfalls mit anderen X substituiert ist und 6 bis 14 Kohlenstoffatome enthält, oder ein Rest $CH_2R_4$, in dem $R_4$ eine primäre, lineare oder verzweigte Alkylgruppe mit 1 bis 18 Kohlenstoffatomen ist, eine primäre $C_7$—$C_{14}$-Arylalkylgruppe, eine Alkylarylgruppe mit 7 bis 14 Kohlenstoffatomen, eine primäre Alkylengruppe mit 3 bis 18 Kohlenstoffatomen, wobei eine ungesättigte Bindung nicht direkt an X gebunden ist, oder eine Gruppe —$CH_2X$, in der X eine der vorstehenden Bedeutungen hat, oder eine Gruppe —$CH_2R_5X$, in der X eine der vorstehenden Bedeutungen hat und $R_5$ eine Kohlenwasserstoffkette mit 1 bis 18 Kohlenstoffatomen ist, oder eine Gruppe

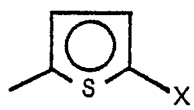

in der X eine der vorstehenden Bedeutungen hat, oder eine makromolekulare vernetze Gruppe oder mit einer Masse von 500 bis 1000000 ist, die mindestens ein anderes X enthält, das an einen aromatischen Kern oder an ein primäres Kohlenstoffatom einer aliphatischen Kette gebunden ist.

5. Verfahren nach Anspruch 4, dadurch gekennzeichnet, daß das organische Halogenid ein Polymeres ist, ausgewählt aus der aus Chlormethylpolystyrol, Polystyrol mit Brommethylgruppen, Poly(p-bromstyrol), Poly(p-chlorstyrol), bromierten Polybutadien und den diese letzten Polymere enthaltenden Copolymeren, wie ein Merrifield-Harz, bestehenden Gruppe.

6. Verfahren nach einem der vorstehenden Ansprüche, dadurch gekennzeichnet, daß das Dihydrocarbylphosphinoxid oder -sulfid $R_1R_2PZH$, in dem $Z = S$ oder O ist, so ist, daß $R_1$ und $R_2$ gleich oder verschieden sind und eine geradkettige oder verzweigte $C_1$ bis $C_{18}$-Alkylgruppe, vorzugsweise $C_1$ bis $C_{12}$, eine $C_7$ bis $C_{10}$- Arylalkylgruppe, ein Phenylgruppe oder eine $C_7$ bis $C_{12}$- Arylgruppe oder eine $C_7$ bis $C_{10}$-Alkylarylgruppe sind oder $R_1$ und $R_2$ zusammen eine Polymethylenkette mit 4 bis 9 Kohlenstoffatomen oder eine Kohlenwasserstoffkette mit mindestens einer ethylenisch-ungesättigten Bindung und 4 bis 9 Kohlenstoffatomen bilden.

7. Verfahren nach einem der vorstehenden Ansprüche, dadurch gekennzeichnet, daß man von 1 bis 20 Mol, vorzugsweise 1,1 bis 6 Mol alkalisches Amid je Mol Dihydrocarbylphosphinoxid oder -sulfid verwendet.

8. Verfahren nach einem der vorstehenden Ansprüche, dadurch gekennzeichnet, daß man von 0,1 bis 20 Mol, vorzugsweise 0,5 bis 3 Mol Dihydrocarbylphosphinoxid oder -sulfid je Mol Halogen verwendet.

9. Verfahren nach einem der vorstehenden Ansprüche, dadurch gekennzeichnet, daß man die Reaktion in Gegenwart eines inerten Lôsungsmittels und zwischen $-20°$ und $+70°C$, vorzugsweise von 15 bis 50°C, in der ersten Stufe und zwischen $-20°$ und $+100°C$, vorzugsweise von 10 bis 60°C, in der zweiten Stufe durchführt.

10. Verfahren nach Anspruch 2 und einem der Ansprüche 3 bis 9, dadurch gekennzeichnet, daß die Molekülassoziation mit dem Alkoholat eines alkalischen Metalls eine komplexe Base ist, die von einem tertiären, sekundären oder primären aliphatischen Alkohol oder von Polyoxyethylenglykol-monoethern ausgehend hergestellt wird.

11. Verfahren nach Anspruch 2 und einem der Ansprüche 3 bis 9, dadurch gekennzeichnet, daß die Molekülassoziation mit Kaliumthiocyanat oder Kaliumnitrit und Natriumamid erfolgt.

12. Verfahren nach Anspruch 2 und einem der Ansprüche 3 bis 9, dadurch gekennzeichnet, daß die Molekülassoziation durch Vermischen eines alkalischen Metalalkyls mit einem Amid eines anderen alkalischen Metals erhalten wird.

13. Substituiertes Polystyrol der Formel

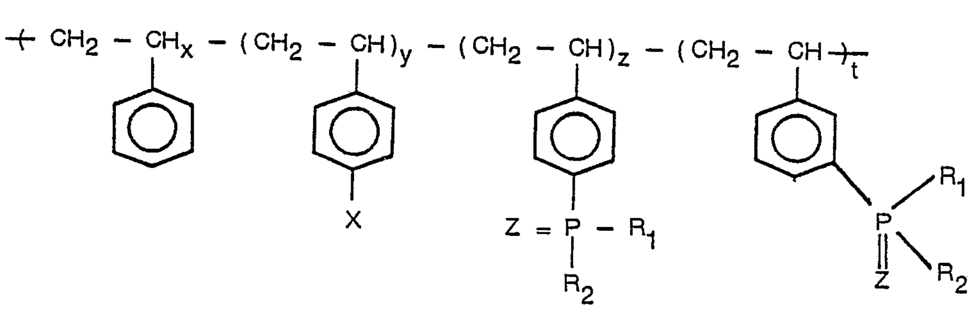

(I)

in der x, y und z solche Zahlen sind, daß $x + y + z + t = 1$, $0 < x < 0,9$, $0,03 < z < 1,0$ und $0 < t/z < 0,4$, wobei Z ein Schwefel- oder Sauerstoffatom ist, X ein Chlor- oder Bromatom ist und $R_1$ und $R_2$ gerad-

kettige oder verzweigte $C_1$ bis $C_{18}$-Alkylgruppen sind, vorzugsweise $C_1$ bis $C_{12}$, und insbesondere beide Octylgruppen, bei einem Zahlenmittel der Molekularmasse Mn von $20000 < Mn < 1000000$.

14. Substituiertes Polystyrol der Formel

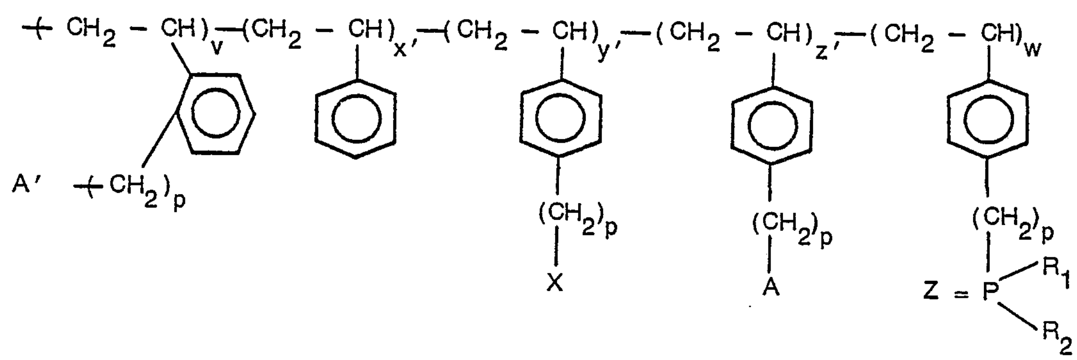

in der $2 < p < 12$, v, w, x′, y′, z′ solche Zahlen sind, daß $v + w + x' + y' + z' = 1$, $v/y' + z' + w < 0{,}1$, $0 < x' < 0{,}7$, $0 < y' < 0{,}4$, $0 < z' < 0{,}1$ und $0{,}03 < w < 0{,}9$, wobei X = Cl oder Br, Z = O oder S, $R_1$ und $R_2$ gleich oder verschieden sind und eine geradkettige oder verzeigte $C_1$ bis $C_{18}$-Alkylgruppe, vorzugsweise $C_1$ bis $C_{12}$, eine $C_7$ bis $C_{10}$-Arylalkylgruppe darstellen, A ein Phenylkern einer Polystyrolkette der gleichen Art ist, wobei A′ einerseits X, andrerseits eine Gruppe —$PZR_1R_2$ ist und Z, X, $R_1$ und $R_2$ die vorstehenden Bedeutungen haben.

**Claims**

1. Process for the synthesis of tertiary phosphine oxides and sulphides of the formula $R_1R_2R_3PZ$, in which Z = S or O, $R_1$ and $R_2$ are hydrocarbyl radicals and $R_3$ is an organic radical, which consists, in a first step, in obtaining an alkali metal dihydrocarbyl(thio)phosphinite of the formula $R_1R_2PZM$ from the corresonding dihydrocarbylphosphine oxide or sulphide $R_1R_2PZH$, and then, in a second step, in reacting the said alkali metal dihydrocarbyl(thio)phosphinite with an organic halide of the formula $R_3X$, characterised in that the first step is carried out by reacting an alkali metal amide of the formula $MNH_2$ with the said dihydrocarbylphosphine oxide or sulphide, the second step being carried out in the presence of the unreacted part of the said alkali metal amide.

2. Process according to Claim 1, characterised in that the alkali metal amide is activated in the form of molecular associations based on an alkali metal alcoholate, based on a salt selected from the group comprising the thiocyanates, the cyanates, the nitrites and the cyanides of sodium, lithium or potassium, or based on an organoalkali metal compound.

3. Process according to Claim 1 or 2, characterised in that the organic halide of the formula $R_3X$ is an organic halogen derivative or organic polyhalogen derivative containing at least one halogen atom in the form of a halogenoaryl group or halogenomethyl group.

4. Process according to Claim 3, characterised in that the organic halide of the formula $R_3X$ is such that X = Cl, Br or I and such that $R_3$ is an aromatic group optionally substituted by other X atoms and containing from 6 to 14 carbon atoms, or a group $CH_2R_4$, in which $R_4$ is a linear or branched primary alkyl group containing from 1 to 18 carbon atoms, a primary aralkyl group containing 7 to 14 carbon atoms, an alkaryl group containing from 7 to 14 carbon atoms or a primary alkylene group containing from 3 to 18 carbon atoms, one unsaturation not being directly bonded to X, or a group —$CH_2X$, in which X has one of the above meanings, or a group —$CH_2R_5X$, in which X has one of the above meanings and in which $R_5$ is a hydrocarbon chain containing from 1 to 18 carbon atoms, or a group

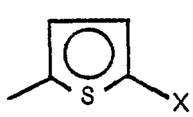

in which X has one of the above meanings, or also a crosslinked macromolecular group or a macromolecular group with a molecular weight of between 500 and 1,000,000, containing at least one other group X carried by an aromatic nucleus or a primary carbon of an aliphatic chain.

5. Process according to Claim 4, characterised in that the organic halide is a polymer chosen from the group comprising chloromethylated polystyrene, polystyrene carrying bromomethylene groups, poly-(p-bromostyrene), poly-(p-chlorostyrene), bromopolybutadiene, and copolymers containing the latter polymers such as a Merrifield resin.

6. Process according to any one of the preceding claims, characterised in that the dihydrocarbylphosphine oxide or sulphide $R_1R_2PZM$, in which Z = S or O, is such that $R_1$ and $R_2$ are identical or different and are a linear or branched $C_1$ to $C_{18}$, preferably $C_1$ to $C_{12}$, alkyl group, a $C_7$ to $C_{10}$ aralkyl group, a phenyl group or a $C_7$ to $C_{12}$ aryl group, or a $C_7$ to $C_{10}$ alkaryl group, or $R_1$ and $R_2$, taken together,

form a $C_4$ to $C_9$ polymethylene chain or a $C_4$ to $C_9$ hydrocarbon chain containing at least one ethylenic unsaturation.

7. Process according to any one of the preceding claims, characterised in that between 1 and 20 moles, preferably from 1.1 to 6 moles, of alkali metal amide are used per mole of dihydrocarbylphosphine oxide or sulphide.

8. Process according to any one of the preceding claims, characterised in that between 0.1 and 20 moles, preferably from 0.5 to 3 moles, of dihydrocarbylphosphine oxide or sulphide are used per mole of halogen.

9. Process according to any one of the preceding claims, characterised in that the reaction is carried out in the presence of an inert solvent and at between —20° and +70°C, preferably at between 15 and 50°C, for the first step, and at between —20° and +100°C, preferably at between 10 and 60°C, for the second step.

10. Process according to Claim 2 and any one of Claims 3 to 9, characterised in that the molecular association based on an alkali metal alcoholate is a complex base prepared from a tertiary, secondary or primary aliphatic alcohol or polyoxyethylene glycol monoethers.

11. Process according to Claim 2 and any one of Claims 3 to 9, characterised in that the molecular association is based on potassium thiocyanate or nitrite and based on sodium amide.

12. Process according to Claim 2 and any one of Claims 3 to 9, characterised in that the molecular association is obtained by mixing an alkyl-alkali metal compound with an amide of another alkali metal.

13. By way of a new product, the substituted, polystyrene of the formula

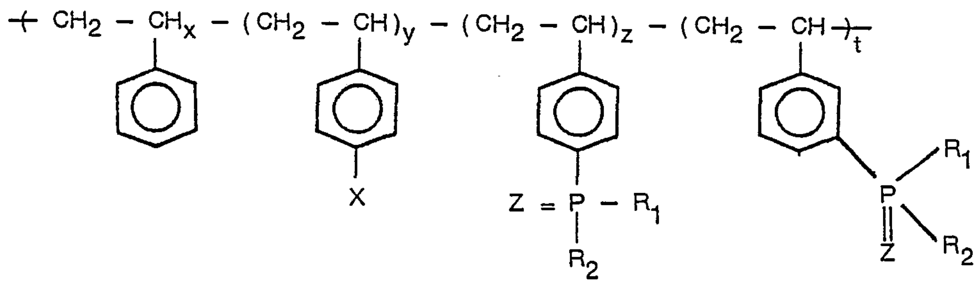

(I)

in which x, y, z and t are numbers such that $x + y + z + t = 1$, $0 < x < 0.9$, $0 < y < 0.5$, $0.03 < z < 1.0$ and $0 < t/z < 0.4$, Z being a sulphur or oxygen atom, X being a chlorine or bromine atom and $R_1$ and $R_2$ being linear or branched $C_1$ to $C_{18}$ alkyl groups, preferably $C_1$ and $C_{12}$ groups and in particular octyl groups in both cases, for a number-average molecular weight $\overline{Mn}$ such that $20,000 < \overline{Mn} < 1,000,000$.

14. By way of a new product, the substituted polystyrene of the formula

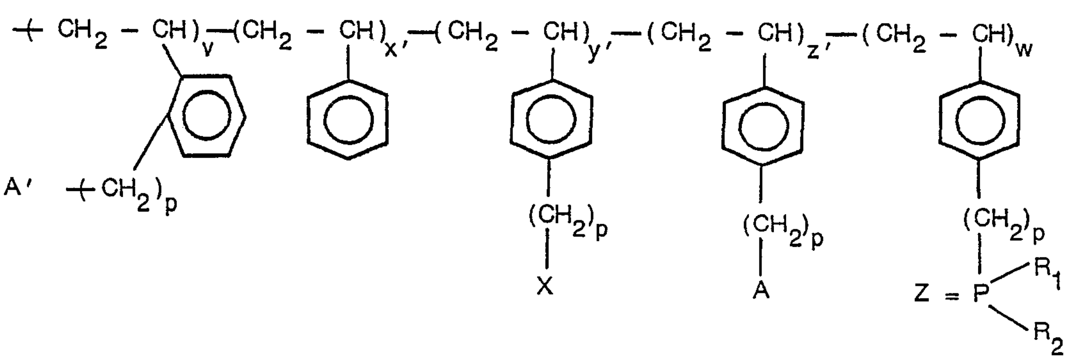

in which $2 < p < 12$, v, w, x', y' and z' are numbers such that $v + w + x' + y' + z' = 1$, $v/y' + z' + w < 0.1$, $0 < x' < 0.7$, $0 < y' < 0.4$, $0 < z' < 0.1$ and $0.03 < w < 0.9$, X = Cl or Br, Z = O or S, $R_1$ and $R_2$ are identical or different and are a linear or branched $C_1$ to $C_{18}$, preferably $C_1$ to $C_{12}$, alkyl group or a $C_7$ to $C_{10}$ aralkyl group, and A is a phenyl nucleus of a polystyrene chain of the same type, the groups A' being in some cases a group X and in other cases a group $—PZR_1R_2$, Z, X, $R_1$ and $R_2$ having the above meanings.